# EUROPEAN PATENT APPLICATION

(11) **EP 1 260 852 A1**
(43) Date of publication of application: **27.11.2002**
(21) Application number: 01953634.1
(22) Date of filing: 30.01.2001
(51) Int. Cl.: G02F 1/1333

(54) **LIQUID CRYSTAL PROJECTOR**

(30) Priority: 24.02.2000 JP 2000048235
(71) Applicant: Nippon Mitsubishi Oil Corporation, Minato-ku, Tokyo 105-8412 (JP)
(72) Inventor: YODA, Eiji c/o NIPPON MITSUBISHI OIL CORP., Naka-ku Yokohama-shi Kanagawa 231-0815 (JP)
(74) Representative: Modin, Jan
(86) International application number: JP0100593
(87) International publication number: WO01063348

(57) **Abstract**

A liquid crystal projector provided with a liquid crystal shutter which comprises a pair of transparent substrates with electrodes, two polarizers, and at least two optically anisotropic layers each comprising a hybrid-oriented liquid crystal layer, wherein the two optically anisotropic layers are arranged between the two polarizers such that a tilt direction of one of the two optically anisotropic layers forms an angle of 85 to 100 degrees with that of the other optically anisotropic layer thereby improving significantly the contrast without a major modification to a liquid crystal projector.

## Description

### [Technical Field]

This invention relates to liquid crystal projectors and more particularly to those drastically improved in contrast properties.

### [Background of the Invention]

A liquid crystal projector displays a magnified image obtained by magnifying lights transmitted through liquid crystal displays from a light source located in the rear side of the displays, with lenses. Now, the liquid crystal projector has been strongly demanded to be improved in the brightness and contrast of the displayed image.

As measures for increasing the brightness of the displayed image from a projector, there may be considered two methods in one of which the luminance of the light source is increased by raising the power of the lump or by changing the type thereof and -in the other of which the utilization efficiency of the light from the light source is enhanced by increasing the condensing rate of each lens. The former method is easy to carry out but requires a cooling device which is more powerful than conventional ones, resulting in a problem that the device is increased in weight and size. The latter is also easy to conduct, but has a problem that the resulting device is reduced in contrast.

The object of the present invention is to provide a liquid crystal projector which is significantly improved in contrast without a major modification to the structure of a liquid crystal projector.

### [Disclosure of the Invention]

According to a first aspect of the present invention, there is provided a liquid crystal projector provided with a liquid crystal shutter which comprises a liquid crystal cell comprising a pair of transparent substrates with electrodes and a nematic liquid crystal and two polarizers wherein the liquid crystal shutter further comprises two optically anisotropic layers each comprising a hybrid-oriented liquid crystal layer, and the two optically anisotropic layers are arranged between the two polarizers such that a tilt direction of one of the two optically anisotropic layers forms an angle of 90 to 95 degrees with that of the other optically anisotropic layer.

According to a second aspect of the present invention, there is provided a liquid crystal projector wherein the optically anisotropic layers each have an average tilt angle of 10 to 80 degrees and an absolute value of retardation of 50 to 300 nm.

The present invention will be described below in more detail.

The liquid crystal projector of the present invention is provided with a liquid crystal shutter which comprises a liquid crystal cell, two polarizers, and two optically anisotropic layers wherein the two optically anisotropic layers are arranged such that the tilt directions of the two optically anisotropic layers form an angle of 85 to 100 degrees.

The respective optically anisotropic layers comprise at least a hybrid-oriented liquid crystal layer. The hybrid-oriented liquid crystal layer used herein denotes those in which the directors of the nematic-oriented molecules continuously vary from the vicinity of one interface of the layer to that of the other interface and the angles formed by each director and a plane of the liquid crystal layer vary at every location in the thickness direction of the liquid crystal layer. Therefore, an optical axis no longer exist in the whole liquid crystal layer.

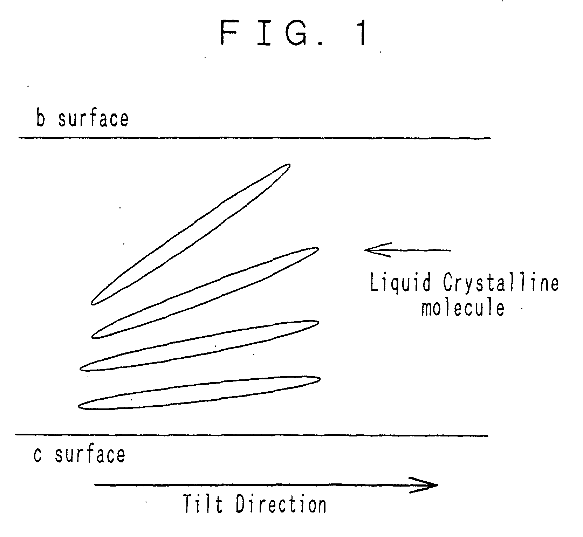

A tilt direction of an optically anisotropic layer in the present invention is defined as a projection direction of a director of the liquid crystalline molecule on the upper or lower surface of the liquid crystal layer with whichever the director forms a smaller angle. More specifically, for example, assuming in Fig. 1 that the upper and lower surfaces of an optically anisotropic layer are b- and c-planes, respectively, the director of a liquid crystalline molecule and a plane of the liquid crystal layer form an acute angle at the c plane side and an obtuse angle at the b plane side. That is, the relation of these angles is represented by "the angle at the b plane side > the angle at the c plane side". The tilt direction of the optically anisotropic layer is defined by a direction in which each director of the liquid crystalline molecules is inclined upwardly from a plane of the liquid crystal layer along the acute angle. As apparent from Fig. 1, when the c plane side is viewed from the b plane side along the thickness direction of the liquid crystal layer, projections through the liquid crystal molecules are superposed to one after another. Herein, the average of angles between the directors of the liquid crystalline molecules and the plane of the optically anisotropic layer is defined as an average tilt angle.

In the present invention, two optically anisotropic layers are used. The absolute value of angle formed by the tilt directions of the two layers is within the range of 85 to 100 degrees, preferably 87 to 97 degrees, and more preferably 90 to 95 degrees. Deviation from this range would fail to improve the contrast sufficiently.

The average tilt angle of each of the optically anisotropic layers is preferably within the range of 10 to 80 degrees. The two optically anisotropic layers are essential components for the liquid crystal projector of the present invention. The average tilt angle of one of the optically anisotropic layers may be the same or different from that of the other layer.

The retardation of the optical anisotropic layers is defined by the product Δnd of refractive index anisotropy Δn at a light wavelength of 550 nm and physical film thickness d. If the optical anisotropy is positive, the value of Δnd will be positive. If the optical anisotropy is negative, the value of Δnd will be negative. In the present invention, there may be used optically anisotropic layers having either positive or negative Δnd. The absolute value of Δ nd is preferably from 50 to 300 nm and more preferably from 70 to 250 nm. Deviation from these ranges would fail to provide the effect of improving contrast. Other than the optical anisotropic layers used in the present invention, there may be used other materials having an optical anisotropy in combination. In such a case, the retardation value is defined by the total retardation value of all the optically anisotropic layers disposed between a liquid crystal cell and a polarizer described below.

A hybrid-oriented liquid crystal layer used as the optically anisotropic layer in the present invention may be obtained by aligning and fixing a liquid crystal exhibiting anisotropically positive or negative uniaxial properties in a conventional manner. The liquid crystal layer can be used in the present invention by forming it on a suitable substrate such as triacetyl cellulose. For the purpose of protecting the surfaces of the liquid crystal layer, a photo- or thermal-set overcoat layer may be provided.

Examples of liquid crystalline substances exhibiting anisotropically positive uniaxial properties are condensation-type liquid crystalline polymers obtained by condensing a compound having a carboxyl, alcohol hydroxyl, phenolic hydroxyl, amino, or thiol group; liquid crystalline vinyl polymers formed of a liquid crystalline compound having an acryloly, methacryloyl, vinyl, or aryl group having a double bond; liquid crystalline polysiloxanes synthesized from a liquid crystalline compound having an alkoxysilane group; liquid crystalline epoxy resins synthesized from a liquid crystalline compound having an epoxy group; and a mixture of the liquid crystalline polymers, among which the most preferred are the condensation liquid crystalline polymers. Liquid crystalline low molecular compounds may also be used. In the case of using such compounds, their orientation state is preferably fixed by thermal- or photo-crosslinking.

Examples of liquid crystalline substances exhibiting anisotropically negative uniaxial properties are disc-shaped low molecular liquid crystalline compounds such as triphenylene derivatives and torquecene derivatives. In the case of using such low molecular liquid crystalline compounds, their orientation state is preferably fixed by thermal- or photo-crosslinking.

The liquid crystal cell has a pair of transparent substrates each having an electrode and a nematic liquid crystal layer inserted between the substrates. The transparent substrate may be that which aligns the nematic liquid crystal layer in a specific direction. Specifically, there may be used transparent substrates having properties to align the nematic liquid crystal by themselves and those provided thereon with an alignment film having properties to align the nematic liquid crystal. Such two transparent substrates having a specific aligning direction are fixed such that their aligning directions are twisted and a nematic liquid crystal layer is formed between the substrates thereby providing a specific twist angle in the nematic liquid crystal layer. The electrode of the liquid crystal cell is usually provided on the surface of the substrate contacting the nematic liquid crystal layer. In the case of using substrates each having an alignment film, the electrode is provided between the transparent substrate and the alignment film. No particular limitation is imposed on the nematic liquid crystal which, therefore, may be a variety of those generally used in liquid crystal display devices.

As the polarizers, there are generally used those produced by allowing iodine or a dichromatic dye to be absorbed on a polymeric film such as extended polyvinyl alcohol or polyvinyl butyral. The polarizer is produced by a wet-type or dry-type method and is usually sandwiched at their both sides with supporting members. Examples of the supporting members are polymeric films formed from triacetyl cellulose, acrylic resins, polycarbonate, or polyethylene terephthalate. However, triacetyl cellulose is preferably used. The film thickness of the polarizer is usually from 10 to 50 µm and preferably from 25 to 35 µm. The film thickness of the supporting member is usually from 30 to 250 µm and preferably from 50 to 190 µm. An acrylic, polsiloxane, or urethane protective layer may be provided on a surface of the polarizer.

The liquid crystal shutter used in the liquid crystal projector of the present invention may be provided with a half-wave plate. No particular limitation is imposed on such a half-wave plate as long as it has an optical thickness corresponding to a half of the wavelength of each red, green, and blue color component. Preferred half-wave plates are polymeric films obtained by stretching uniaxially polycarbonate, polyvinyl alcohol, or polyvinyl butyral. These half-wave plates can be produced by any conventional method. For example, in the case of using polycarbonate, it is heated and uniaxially stretched thereby obtaining a half-wave plate having a film thickness of from 20 to 300 µm and preferably from 50 to 200 µm. In the case of using polyvinyl alcohol or polyvinyl butyral, it is uniaxially stretched by a wet-type method to form a half-wave plate whose both sides are usually sandwiched by supporting members when it is used. Examples of the supporting member are polymeric films such as triacetyl cellulose, acrylic resins, polycarbonate, and polyethylene terephthalate. The film thickness of polyvinyl alcohol or polyvinyl butyral to be sandwiched by the supporting members is usually from 30 to 100 µm and preferably from 50 to 80 µm. The film thickness of each of the supporting members is usually from 30 to 250 µm and preferably from 50 to 190 µm. The half-wave plate may be provided on its surface with an acrylic or polysiloxane- or urethane-based protection layer.

The liquid crystal shutter used in the liquid crystal projector of the present invention is further provided with various types of optical members, depending on optical characteristics to be required. Examples of the optical members are inorganic materials such as soda glass, bolosilicate glass, and sapphire glass and organic materials such as acrylic resins and polycarbonate resins. Preferred are inorganic glasses. These materials are used in the form of desired shape and size of lenses or prisms such as triangle- or cubic-prisms . In the case of a glass sheet, it may be in any shape such as rectangle, square, or circle and has a side or diameter of usually from 5 to 200 mm and preferably from 10 to 150 mm and a thickness of from 0.5 to 5 mm and preferably from 0.7 to 2.3 mm.

The liquid crystal projector of the present invention is provided with a liquid crystal shutter comprising the above-described liquid crystal cell, polarizers, and optically anisotropic layers and optionally half-wave plates and optical members. The arrangement of these components may be any of those such as Polarizer / Optically Anisotropic Layer 1 /Optically Anisotropic Layer 2 / Liquid Crystal Cell /Polarizer; Polarizer / Optically Anisotropic Layer 1 / Liquid Crystal Cell / Optically Anisotropic Layer 2 / Polarizer; and Polarizer / Liquid Crystal Cell /Optically Anisotropic Layer 1 / Optically Anisotropic Layer 2 / Polarizer. The half-wave plate, if provided, is disposed on the outer side of the polarizer. The transparent optical member, if provided, is disposed between these components or on a surface thereof, depending on the optical characteristics to be required. In the above-mentioned arrangements, all the components are not necessarily adhered to each other. For example, the half-wave plate, polarizer, and optical anisotropic layer may be laminated in this order over one surface of the optical member such as a lens or a glass sheet using glue or adhesive and then combined with the liquid crystal cell. Alternatively, all the components may be laminated over the liquid crystal cell.

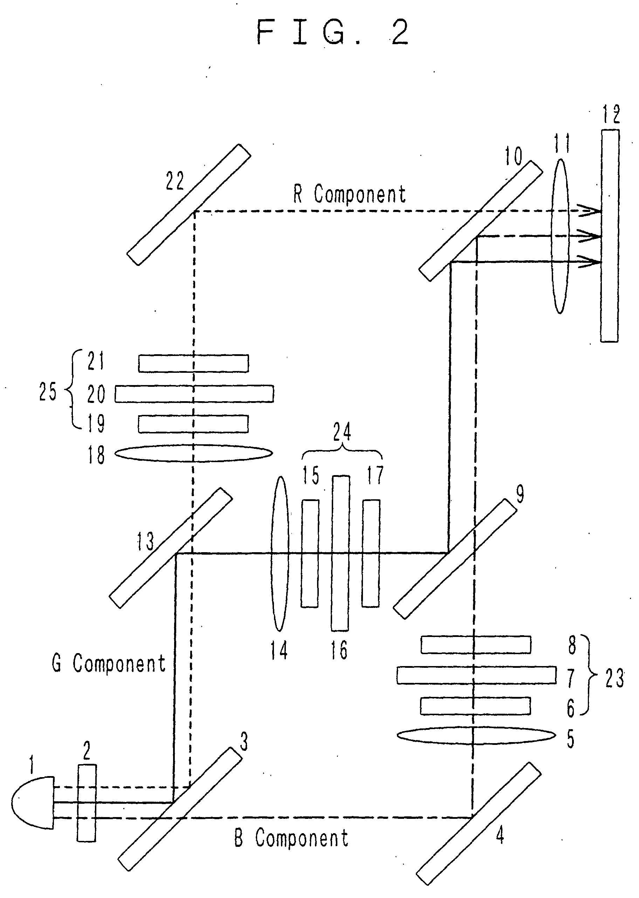

The basic structure of a liquid crystal projector is shown in Fig. 2. A light emitted from a light source which is a metal halide lump 1 transmits through a UV-IR cut filter 2. Among three colors components (red (R), green (G), and blue (B)) of the light, Rand G components are reflected at a dychroic mirror 3 and only B component transmits therethrough.

After B component is reflected at a total reflection mirror 4 and transmits through a condenser lens 5 to condense the luminous flux, B component transmits through a liquid crystal shutter composed of parts indicated by the numerals 6, 7, and 8 and through a dychroic mirror 9 which transmits only B component. Thereafter, B component is reflected at a dychroic mirror 10 which reflects only B and G components, transmits through a projection lens 11, and finally projected on a screen 12.

Similarly to this, after G component reflected at the dychroic mirror 3 is reflected at a dychroic mirror 13, it transmits through a condenser lens 14 and then a liquid crystal shutter composed of the parts indicated by the numerals 15, 16, and 17 and is reflected at a dychroic mirror 9 and then a dychroic mirror 10. Thereafter, G component transmits through a projection lens 11 and projected on the screen 12.

Similarly, after R component reflected at the dychroic mirror 3 transmits through the dychroic mirror 13, a condenser lens 18, and a liquid crystal shutter composed of the parts indicated by the numerals 19, 20, and 21 and then reflected at a total reflection mirror 22. Thereafter, R component transmits through the dychroic mirror 10 and the projection lens 11 and then is projected on the screen 12.

Each of the liquid crystal shutters where each R, G, and B component transmits usually has such a structure that polarizers are arranged at both sides of a liquid crystal cell. The liquid crystal projector of the present invention has two optically anisotropic layers arranged between the polarizers (6 and 8, 15 and 17, and 19 and 21) forming a part of the liquid crystal shutter and located at the both sides thereof such that the tilt direction of one of the optically anisotropic layer and that of the other form the above-described angle.

The embodiment illustrated by Fig. 1 uses dichroic mirrors and total reflection mirrors . However, the use of dichroic prisms instead of the mirrors can also achieve the same effects.

### [Applicability in the industry]

The present invention can enhance the luminance of displayed image and drastically improve the contrast without modifying the light source of a liquid crystal projector.

### [Best mode for carrying out the invention]

### Example 1

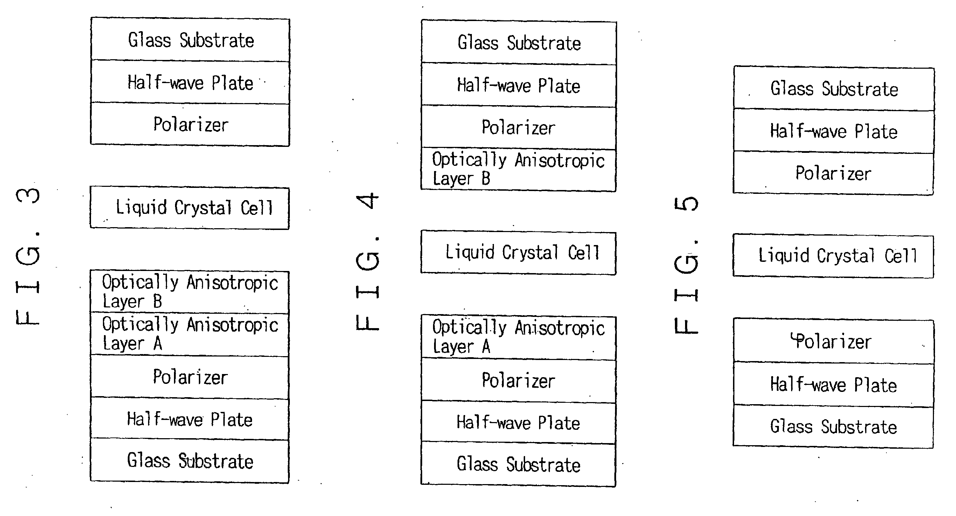

The liquid crystal shutters of the liquid crystal projector shown in Fig. 1 were constructed as shown in Fig. 3.

There were used laminates as optically anisotropic layers each comprising a liquid crystal layer obtained by hybrid-aligning and fixing a nematic liquid crystalline polymer having an optically positive anisotropy and supporting members for the liquid crystal layer and having an average tilt angle of 30 degrees and a retardation of 150 nm.

The liquid crystal shutters are each such constructed that the tilt directions of the two optically anisotropic layers form an angle of 92 degrees. Half-wave plates were selected, taking account of the utilization efficiency of light and the characteristics of the dichroic mirrors and were those corresponding to the wavelength of each R, G, and B component. A left-hand twisted liquid crystal was used in the liquid crystal cell.

The condenser lenses indicated by numerals 5, 14, and 18 each had a diameter 1.5 time as large as a standard lens diameter but had the same focal length as those used in Comparative Example 2 described below. In order to prevent reflection at the surfaces of the optically anisotropic layer and the polarizer facing the liquid crystal cell so as to enhance the light efficiency, the surfaces were subjected for a treatment for reducing the reflection. A light was made incident from the left side of Fig. 3. The contrast and luminance of an image displayed by the projector were measured.

### Example 2

Example 1 was followed except that the tilt direction of one of the two optically anisotropic layers forms an angle of 90 degrees with that of the other layer.

### Example 3

Example 1 was followed except that the liquid crystal shutter was constructed as shown in Fig. 4.

### Comparative Example 1

Example 1 was followed except that the tilt direction of one of the two optically anisotropic layers forms an angle of 83 degrees with that of the other layer.

### Comparative Example 2

Example 1 was followed except that the liquid crystal shutter was constructed as shown in Fig. 5 and condenser lenses having a standard diameter were used.

### Comparative Example 3

Example 1 was followed except that the liquid crystal shutter was constructed as shown in Fig. 5.

The results are shown in Table 1 below. The results of Comparative Example 2 were taken as a reference represented by 100.

**Table 1**

| | Contrast | Luminance |
|---|---|---|
| Example 1 | 200 | 130 |
| Example 2 | 140 | 130 |
| Example 3 | 190 | 130 |
| Comparative Example 1 | 105 | 130 |
| Comparative Example 2 | 100 | 100 |
| Comparative Example 3 | 80 | 130 |

### [Brief Description of the Drawings]

Fig. 1 is a view for describing the definition of tilt direction of an optically anisotropic layer.
Fig. 2 is a schematic view showing the basic structure of the optical system of a liquid crystal projector.
Fig. 3 is a schematic view showing the basic structure of a liquid crystal shutter.
Fig. 4 is a schematic view showing the basic structure of a liquid crystal shutter.
Fig. 5 is a schematic view showing the basic structure of a conventional liquid crystal shutter.

## Claims

1. A liquid crystal projector provided with a liquid crystal shutter which comprises at least a liquid crystal cell comprising a pair of transparent substrates with electrodes and a nematic liquid crystal, two polarizers, and two anisotropic layers each comprising a hybrid-oriented liquid crystal layer wherein the two optically anisotropic layers are arranged between the two polarizers such that a tilt direction of one of the two optically anisotropic layers forms an angle of 85 to 100 degrees with that of the other optically anisotropic layer.

2. The liquid crystal projector according to claim 1 wherein said optically anisotropic layers each have an average tilt angle of 10 to 80 degrees and an absolute value of retardation of 50 to 300 nm.
